# FASCICULE DE BREVET EUROPEEN

(11) **EP 1 383 137 B1**
(45) Date de publication et mention de la délivrance du brevet: **20.08.2008**
(21) Numéro de dépôt: 03291449.1
(22) Date de dépôt: 16.06.2003
(51) Int. Cl.: G21F 9/16, G21F 9/34, C03C 1/00

(54) **Procédé d'immobilisation de sodium métallique sous forme de verre**
Verfahren zum immobilisieren Natriummetall in Glas
Process of immobilising metallic sodium in glass

(30) Priorité: 19.06.2002 FR 0207582
(43) Date de publication de la demande: 21.01.2004
(73) Titulaire: Technip France, 92973 Paris la Défense Cedex (FR)
(72) Inventeur: Mulcey, Philippe, 91440 Bures sur Yvette (FR); Frayer, Jean-Yves, 78920 Ecquevilly (FR)
(74) Mandataire: Bernasconi, Jean Raymond

(56) Documents cités:
- EP-A- 0 854 115
- FR-A- 2 404 901
- US-A- 4 898 692

## Description

La présente invention a trait à un procédé d'immobilisation de sodium métallique sous forme de verre, utilisable en particulier pour réaliser la vitrification de sodium métallique renfermant des éléments radioactifs, tel que le sodium mis en oeuvre à l'état liquide dans certaines installations nucléaires, comme par exemple dans les circuits primaires ou secondaires des réacteurs nucléaires de la filière à neutrons rapides.

Le sodium liquide issu d'une mise en oeuvre dans une installation nucléaire peut présenter des teneurs variables en éléments radioactifs, tels que le ²²Na, le tritium, ou encore le ¹³⁷Cs. Ainsi le sodium présent dans certaines boucles d'essais de réacteurs pilotes peut contenir plus de 0,001% en masse d'éléments radioactifs, alors que le sodium issu d'une mise en oeuvre dans un circuit primaire ou secondaire d'un réacteur nucléaire classique de la filière à neutrons rapides est généralement un sodium faiblement radioactif, qui contient le plus souvent de l'ordre de quelques 10⁻¹² g d'éléments radioactifs par gramme, ces éléments radioactifs possédant en outre une faible durée de demi-vie et des descendants stables. En tout état de cause, quelle que soit sa teneur en éléments radioactif, le sodium issu d'une mise en oeuvre dans une installation nucléaire est considéré, au vu de la législation actuelle, comme un déchet nucléaire en tant que tel, potentiellement contaminant pour le milieu extérieur. Ainsi, même lorsqu'il présente une teneur en éléments radioactifs extrêmement réduite, ce sodium est au moins classé parmi les déchets nucléaires dits "de très faible activité" (TFA). Par conséquent, lors d'opérations de déconstruction d'installations nucléaires mettant en oeuvre le sodium, on est amené à stocker ce sodium, de façon à éviter sa mise en contact avec le milieu extérieur, quel que soit son degré de contamination.

Dans ce cadre, on a proposé d'immobiliser le sodium sous une forme de sel, de silicate, ou d'oxyde, au sein d'une matrice telle qu'un ciment ou un verre, de façon analogue au stockage de nombreux déchets radioactifs ou toxiques. Toutefois, compte tenu de la forte solubilité dans l'eau que présentent les composés du sodium, un problème spécifique auquel on se heurte lors de l'immobilisation de sodium au sein d'une matrice de type verre ou ciment est celui de la lixiviation potentielle du sodium, à savoir la tendance que peut présenter une matrice de verre ou de ciment à relarguer les composés du sodium en présence d'eau. Compte tenu des normes actuelles concernant le stockage de déchets radioactifs, il est nécessaire, pour immobiliser le sodium, de s'orienter vers des matrices possédant une tendance à la lixiviation du sodium la plus faible possible.

De ce point de vue, les matrices de type verre sont généralement les plus intéressantes. Le terme de "verre", au sens de la présente description, doit être compris dans son acception la plus large dans le domaine de la vitrification de déchets, c'est à dire, un mélange solide relativement homogène de différents constituants minéraux, généralement à base de silice, se présentant sous la forme d'un solide non poreux, avantageusement formé d'éléments chimiquement et structurellement liés, et adapté à une immobilisation de déchets. Le terme de "verre" au sens de l'invention désigne de préférence un solide présentant spécifiquement une structure amorphe. Dans certains cas de figure, ce terme peut néanmoins également désigner des solides présentant une structure partiellement cristalline, notamment de type vitro-cristalline, voire des solides cristallins. Au sens où il est employé dans la présente description, le terme de "matrice de type verre" désigne quant à lui toute matrice solide présentant une phase continue à base d'un "verre" au sens de l'invention.

Les matrices de type verre possèdent une surface spécifique beaucoup plus faible que les matrices de type ciments, notamment dans la mesure où elles ne sont pas poreuses. Elles offrent par conséquent une surface d'échange fortement réduite avec le milieu extérieur. Toutefois, il faut souligner que, de façon à ce qu'une matrice de type verre comprenant des composés du sodium soit réellement intéressante en termes de limitation de la lixiviation du sodium , il est généralement souhaitable que les composés du sodium qu'elle contient soient intégrés sous la forme de constituants effectifs de la matrice, et non à titre d'inclusions, sans quoi le composé du sodium est uniquement encapsulé physiquement au sein de la matrice de type verre. Dans ce cas, le composé du sodium présente une solidarisation relativement faible avec la matrice, ce qui se traduit par une très nette augmentation de la tendance à la lixiviation de ce composé.

De façon plus générale, pour éviter le phénomène de lixiviation du sodium au sein d'une matrice de type verre, il est souhaitable que la composition de cette matrice à base de sodium soit la plus homogène possible. Ainsi, pour obtenir des matrices vitrifiées réellement intéressantes, il s'avère donc nécessaire de réaliser l'immobilisation du sodium au sein de ces matrices dans les conditions les plus contrôlées possible.

La plupart des solutions avancées pour réaliser une telle immobilisation du sodium dans des conditions contrôlées consistent à convertir chimiquement le sodium en des dérivés susceptibles de s'intégrer à une matrice vitrifiée, en particulier de type carbonate de sodium ou oxyde de sodium, puis à introduire ces dérivés du sodium dans une formulation de verre, pour ensuite réaliser la vitrification du mélange obtenu dans des conditions contrôlées. Or, les opérations de conversion chimique du sodium mises en oeuvre dans ce cadre mènent à l'obtention d'effluents liquides et/ou gazeux, susceptibles de conduire à un relargage d'éléments radioactifs vers le milieu extérieur. De plus, la plupart des opérations de traitement du sodium radioactif proposées présentent l'inconvénient de mettre en oeuvre plusieurs étapes successives, ce qui, en plus d'impliquer des stockages intermédiaires de composés radioactifs, multiplie encore le nombre d'effluents liquides ou gazeux à maîtriser, ce qui se traduit non seulement en termes de coûts de production importants, mais surtout en termes de multiplication des risques de rejets non contrôlés vers le milieu extérieur.

De façon à éviter de tels problèmes liés à la multiplication d'effluents liquides ou gazeux, une solution intéressante, décrite notamment par R. Kushar et al. dans le rapport ANL-91-21 publié en 1991 par l'Argonne National Laboratory, consiste à mélanger, au sein d'un réacteur dit "cydonique" porté à une température de 1000°C, des particules de silice, d'alumine, de chaux vive et d'oxyde de bore, avec du sodium métallique introduit sous la forme d'une dispersion de gouttelettes à l'état liquide, en présence d'un courant d'air introduit en quantité suffisante pour induire l'oxydation du sodium métallique sous la forme d'oxyde de sodium. Ce procédé permet d'obtenir des matrices vitrifiées de composition homogène et pouvant présenter des taux de lixiviation faible en fonction des quantités de silice, d'alumine, de chaux vive et d'oxyde de bore introduites. Toutefois, ce procédé implique la mise en oeuvre de grandes quantité d'air, dont une partie seulement est consommée par la réaction d'oxydation du sodium, ce qui présente l'inconvénient de mener à la production d'effluents gazeux en quantités importantes en sortie de réacteur, qui sont susceptibles de véhiculer des poussières radioactives, ce qui, là encore, se traduit en termes de coûts de traitements d'effluents et de répercussions potentielles sur l'environnement.

De façon plus générale, on ne connaît pas à l'heure actuelle de procédé de vitrification sans production notable d'effluents gazeux permettant, au sein d'un seul réacteur, de préparer, à partir de sodium métallique, une matrice vitrifiée de composition homogène intégrant le sodium sous la forme d'un oxyde.

Or, les inventeurs ont maintenant découvert qu'un tel procédé pouvait être réalisé en introduisant, au sein d'un réacteur de vitrification, du sodium métallique, un précurseur de la matrice vitrifiée finale, et un oxyde de fer Fe₂O₃ à titre d'agent d'oxydation du sodium, sous réserve que le sodium, l'oxyde de fer et le précurseur de la matrice minérale soient spécifiquement introduits dans le réacteur sous une forme dispersée. Les inventeurs ont mis en évidence que la mise en oeuvre des différents constituants à l'état dispersé permet non seulement d'optimiser la réaction d'oxydation du sodium par l'oxyde de fer Fe₂O₃, mais également d'obtenir *in fine* une matrice vitrifiée de composition homogène.

Sur la base de cette découverte, la présente invention a pour but de fournir un procédé d'immobilisation de sodium au sein d'une matrice vitrifiée, adapté pour réaliser le confinement de sodium comprenant des éléments radioactifs.

Dans ce cadre, un des buts de l'invention est en particulier de fournir un procédé d'immobilisation du sodium limitant les échanges possibles entre le sodium contaminé et le milieu extérieur.

De façon plus générale, l'invention se donne également pour but de fournir un procédé d'immobilisation de sodium métallique sous la forme d'un verre, à la fois simple à mettre en oeuvre et où la composition finale de la matrice vitrifiée obtenue peut être modulée facilement en fonction des propriétés recherchées pour cette matrice, notamment en terme de résistance à la lixiviation et à la dévitrification.

Ainsi, la présente invention a pour objet un procédé d'immobilisation de sodium métallique sous forme de verre, comprenant les étapes consistant à :
(A) introduire au sein d'un réacteur :
   (i) un précurseur de matrice vitrifiée ;
   (ii) du sodium à l'état métallique ;
      et
   (iii) de l'oxyde de fer Fe₂O₃, en une quantité suffisante pour assurer l'oxydation du sodium métallique (ii) introduit,
   lesdits constituants (i), (ii) et (iii) étant spécifiquement introduits dans le réacteur sous une forme dispersée ;
(B) par mise en contact des constituants (i), (ii) et (iii) sous forme dispersée au sein du réacteur, réaliser un mélange homogène de ces constituants;
(C) porter le mélange obtenu à une température comprise entre 1000 et 1600°C, de préférence supérieure à 1200°C, et avantageusement supérieure à 1400°C, ce par quoi on forme un mélange homogène à l'état fondu, dans lequel le sodium initialement introduit se trouve à l'état d'oxyde de sodium ; et
(D) récupérer le mélange fondu ainsi obtenu, et le soumettre à un refroidissement, ce par quoi on obtient une matrice vitrifiée de composition homogène intégrant le sodium initialement introduit à titre d'oxyde constitutif de ladite matrice vitrifiée.

De façon large, par "précurseur de matrice vitrifiée" au sens de l'invention, on entend un ensemble de constituants, généralement solides, préférentiellement inertes à basse température vis-à-vis du sodium et de l'oxyde de fer, et susceptibles de mener à l'obtention d'une matrice vitrifiée suite à l'étape de traitement thermique (C) et au refroidissement de l'étape (D), en présence des produits de réaction du sodium et de l'oxyde de fer Fe₂O₃.

Dans le cas le plus général, le précurseur de matrice minéral (i) de l'invention peut être constitué de tout mélange de particules à base d'oxydes, de carbonates ou de sels utilisé de façon courante dans la constitution de verres. Dans ce cadre, il peut en particulier être choisi parmi les mélanges généralement désignés par le terme de "matière crues" mis en oeuvre dans la constitution des verres dits "nucléaires", utilisés pour réaliser le confinement de déchets radioactifs. Ainsi, le précurseur de matrice vitrifiée (i) peut par exemple être constitué au moins en partie de particules solides comprenant des particules à base d'oxyde de silicium SiO₂, généralement en association avec des particules à base d'oxyde de calcium CaO et/ou d'oxyde de bore B₂O₃, éventuellement en association avec des particules à base d'oxyde d'aluminium et/ou d'oxyde de magnésium, les particules à base des différents oxydes précités pouvant être des particules à base d'un seul de ces oxydes, ou bien à base d'une association de deux ou plusieurs de ces oxydes.

Notamment de façon à ce que la matrice vitrifiée obtenue à l'issue du procédé de l'invention présente une tendance à la lixiviation et à la dévitrification la moins prononcée possible, on préfère généralement que le précurseur de matrice vitrifiée de l'invention comprenne un mélange de particules à base :
- d'oxyde de silicium SiO₂, et
- d'oxyde de calcium CaO et/ou d'oxyde de bore B₂O₃,
avec des ratios massiques SiO₂/(CaO + B₂O₃) généralement compris entre 1 et 10, et de préférence entre 5 et 8. L'oxyde de bore B₂O₃ peut en particulier être mis en oeuvre pour faire diminuer la température de fusion du précurseur de matrice vitrifiée (i) ou pour améliorer la tenue mécanique de la matrice lors du refroidissement de l'étape (D). Notamment de façon à améliorer encore les propriétés de la matrice de verre obtenue in fine, le précurseur (i) peut en outre avantageusement comprendre des composés choisis parmi l'oxyde d'aluminium Al₂O₃, l'oxyde de magnésium, ou l'oxyde de zinc.

De façon préférentielle, le précurseur de matrice vitrifiée de l'invention comprend :
- de l'oxyde de silicium à raison de 20 % à 80 % en masse, et de préférence entre 40 % et 75 % en masse ;
- de l'oxyde de calcium à raison de 0 % à 20 % en masse, et de préférence entre 1 % et 10 % en masse ;
- de l'alumine à raison de 0 % à 20 % en masse, et de préférence entre 1 % et 10 % en masse ;
- de l'oxyde de bore B₂O₃ à raison de 0 % à 20 % en masse et de préférence entre 1 % et 10 % en masse.

Quelle que soit sa composition exacte, le précurseur de matrice vitrifiée (i) est spécifiquement introduit dans le réacteur où est conduit le procédé de l'invention sous une forme dispersée. Ainsi, il est généralement introduit sous la forme d'un mélange de particules, généralement des particules d'oxydes métalliques, ou des particules de frittes de verre préformé, ces particules possédant de préférence une taille moyenne comprise entre 0,1 et 20 millimètres, avantageusement inférieure à 10 millimètres, et de préférence inférieure à 5 millimètres. Ainsi, le précurseur de matrice vitrifiée de l'invention peut avantageusement être mis en oeuvre sous la forme d'un mélange de particules de silice, d'alumine, de chaux vive et d'oxyde de bore de granulométries comprises entre 1 et 3 millimètres. Il peut également être mis en oeuvre sous la forme de frittes de verre, notamment sous la forme de frittes de verre à base d'oxydes de silicium, d'aluminium, de calcium et de bore, ces frittes de verres possédant avantageusement une taille moyenne comprise entre 1 et 10 millimètres, et de préférence inférieure à 5 millimètres.

Il est à souligner que, compte tenu du fait que le procédé de l'invention ne mène pas à une production notable d'effluents, ce procédé peut être conduit dans des conditions de confinement poussées, particulièrement adaptées lors de la mise en oeuvre de composés radioactifs. De ce fait, le sodium métallique mis en oeuvre dans le procédé de l'invention peut avantageusement être un sodium renfermant des éléments radioactifs, et il peut notamment s'agir de sodium issu d'un circuit primaire ou secondaire de réacteur nucléaire de la filière dite à neutrons rapides.

Quelle que soit sa nature exacte, le sodium mis en oeuvre selon le procédé de l'invention est spécifiquement introduit dans le réacteur sous une forme dispersée.

Ainsi, selon un mode particulièrement avantageux, le sodium peut être introduit au sein du réacteur sous la forme de gouttelettes liquides, de taille préférentiellement comprise entre 10 microns et 500 microns avantageusement inférieure à 200 microns et de préférence comprise entre 50 et 150 microns, ces gouttelettes étant le plus souvent obtenues par pulvérisation du sodium liquide, par exemple au moyen d'une buse d'injection.

Selon un autre mode de mise en oeuvre envisageable, le sodium introduit peut également être issu d'un pré-mélange du sodium liquide à l'état dispersé avec une partie au moins du précurseur de matrice vitrifié. Dans ce cas, le sodium à l'état dispersé qui est introduit se trouve sous la forme de sodium déposé sur des particules de précurseur de matrice vitrifié. Ainsi, selon ce mode particulier, le sodium à l'état dispersé qui est introduit dans l'étape (A) du procédé peut par exemple se présenter sous la forme de particules de silice à la surface desquelles du sodium est déposé.

Généralement, notamment de façon à obtenir une matrice vitrifiée possédant une tendance à la lixiviation la plus faible possible à l'issue du procédé de l'invention, il est souvent préférable que, dans cette matrice, le taux de sodium incorporé soit inférieur à 30% en masse, et avantageusement inférieur à 20 % en masse, par rapport à la masse totale de la matrice. On préfère par ailleurs que ce taux de sodium incorporé soit supérieur à 4% en masse, et avantageusement à 5% en masse, par rapport à la masse totale de la matrice. Ainsi, ce taux est typiquement compris entre 5% et 15 % en masse par rapport à la masse totale de la matrice.

De ce fait, on préfère généralement que la masse de sodium métallique introduite dans le réacteur soit comprise entre 3% et 20% en masse par rapport à la masse de précurseur de matrice vitrifiée introduite. Avantageusement, cette masse de sodium introduite est inférieure ou égale à 14% en masse, et de préférence inférieure ou égale à 12% en masse, par rapport à la masse de précurseur de matrice vitrifiée introduite.

Par ailleurs, dans le cas particulier où le précurseur de matrice vitrifié est à base d'oxyde de silicium, ce qui est généralement le cas, on préfère que le ratio molaire de la quantité de sodium introduite rapportée à la quantité de silicium introduite au sein du précurseur de matrice vitrifiée soit compris entre 1 : 20 et 1 : 1, et avantageusement inférieur à 1 : 6.

Un des constituants essentiels mis en oeuvre selon le procédé de l'invention est l'oxyde de fer Fe₂O₃. Ce constituant assure au sein du réacteur la transformation du sodium en oxyde, forme sous laquelle le sodium est effectivement intégré au sein de la matrice vitrifiée, spécifiquement à titre d'élément constitutif de cette matrice, et non comme élément d'inclusion. Le fer est par ailleurs un élément formateur de structure, au même titre que le silicium ou l'aluminium. En particulier en présence de ces éléments silicium et aluminium, le fer forme par interconnections, le réseau vitreux. Il est également susceptible de mener à la formation de structures minérales connues comme incluant des cavités aptes à emprisonner certains contaminants radioactifs éventuellement présents dans le sodium. Il est fortement préférable que l'oxyde de fer Fe₂O₃ soit introduit dans le réacteur sous une forme dispersée, notamment de façon à assurer un maximum d'interfaces de contact entre cet oxyde et le sodium, également introduit sous une forme dispersée offrant une haute surface d'échange. De ce fait, on préfère généralement que l'oxyde de fer Fe₂O₃ soit introduit sous la forme de particules comprenant de l'oxyde de fer Fe₂O₃, ces particules étant de préférence essentiellement constituées d'oxyde de fer Fe₂O₃ , et possédant avantageusement une taille moyenne comprise entre 0,1 et 20 millimètres, de façon particulièrement préférée inférieure à 10 millimètres, et avantageusement inférieur à 5 millimètres. On préfère que la surface spécifique de ces particules soit la plus élevée possible.

La quantité d'oxyde de fer Fe₂O₃ introduite est également déterminante pour assurer une oxydation effective du sodium introduit à l'état métallique. En effet, il est nécessaire que l'oxyde de fer Fe₂O₃ soit introduit en quantité suffisante pour assurer cette oxydation. Dans ce cadre, on préfère généralement que le ratio molaire de la quantité de fer introduite sous forme d'oxyde de fer Fe₂O₃, rapportée à la quantité de sodium introduite soit compris entre 0,5 :1 et 3 : 1. De préférence, ce ratio molaire est supérieur ou égal à 0,6:1, et avantageusement supérieur ou égal à 0,9:1. Par ailleurs, on préfère généralement que ce ratio molaire soit inférieur à 2:1, et avantageusement inférieur à 1,5 : 1.

Sans vouloir être lié en aucune façon à une théorie particulière, il semble pouvoir être avancé que la réaction d'oxydation du sodium qui a lieu au sein du réacteur met en oeuvre les réactions suivantes :

2 NA + FE₂O₃ → Na₂O + 2 FeO

2 NA + 3FE₂O₃ → Na₂O + 2 Fe₃O₄

En tout état de cause, la matrice vitrifiée obtenue *in fine* contient généralement des oxydes de fer FeO et/ou Fe₃O₄, voire des oxydes Fe₂O₃ résiduels. En particulier lorsque le procédé de l'invention est conduit pour réaliser un confinement de sodium comprenant des éléments radioactifs, il est le plus souvent nécessaire de maîtriser la quantité de fer introduite dans la matrice vitrifiée réalisée selon l'invention. A cet effet, il est généralement préférable que la masse de Fe₂O₃ introduite soit comprise entre 5 % et 50 % en masse par rapport à la masse de précurseur de matrice vitrifiée introduite, et de préférence en une quantité inférieure à 35% en masse, avantageusement inférieure à 30% en masse, et plus préférentiellement inférieure à 25 % en masse.

Quelle que soit leur nature exacte et leurs proportions respectives, les constituants (i), (ii) et (iii) de l'étape (A) du procédé de l'invention sont généralement introduits en l'absence de toute trace d'eau, de façon à éviter toute réaction du sodium avec de l'eau, qui serait susceptible de mener à la fois à la production d'un effluent gazeux hydrogéné, et à une fragilisation de la matrice vitrifiée obtenue *in fine.* Pour ce faire, préalablement à leur mise en oeuvre dans le procédé, le précurseur de matrice vitrifiée et l'oxyde de fer Fe₂O₃ mis en oeuvre sont généralement séchés puis stockés à l'abri de toute trace d'humidité. Les solides introduits au sein du réacteur peuvent être véhiculés par de faibles quantités de gaz vecteur. Dans ce cas, le gaz vecteur est généralement exempt de toute trace d'eau, et il s'agit de préférence d'un gaz inerte tel que l'azote. Ce gaz vecteur est uniquement susceptible de mener à la formation de faibles débits d'effluents gazeux, ce qui est particulièrement avantageux lorsque le procédé est conduit sur du sodium renfermant des éléments radioactifs (limitation des effluents secondaires).

Par ailleurs, les constituants (i), (ii) et (iii) de l'étape (A) du procédé de l'invention sont généralement introduits au sein du réacteur à une température allant de 15°C à 150°C, le sodium étant généralement introduit à l'état liquide, c'est à dire à une température de préférence supérieure à 100°C, le plus souvent entre 110°C et 130°C, et les autres constituants pouvant être introduits à des température plus basses, par exemple entre 15°C et 100°C, typiquement entre 20 et 60°C.

Le mélange homogène de l'étape (B) du procédé, réalisé par mise en contact des différents constituants (i), (ii) et (iii) sous forme dispersée, est généralement effectué en introduisant le précurseur de matrice vitrifiée et l'oxyde de fer au sein du réacteur sous la forme d'une pluie de particules et en pulvérisant le sodium à l'état liquide au sein de ladite pluie de particules.

Par "pluie de particules" au sens de l'invention, on entend une dispersion tombante de particules, avantageusement dispersées de façon homogène, du type de celles utilisées dans les réacteurs mettant en oeuvre des réactifs sous forme pulvérulente ou dispersée. Des pluies de particules selon l'invention peuvent être réalisées en mettant en oeuvre tout type de système de dispersion de poudre usuel connu de l'état de la technique. La pluie de particules à base du précurseur de matrice vitrifiée et de l'oxyde de fer est avantageusement réalisée à partir d'un mélange initial de l'oxyde de fer (iii) avec le précurseur de matrice vitrifiée (i), mais elle peut alternativement être obtenue par interpénétration de deux ou plusieurs pluies de particules à base d'oxyde de fer et de précurseur de matrice vitrifiée.

Un autre mode de réalisation du mélange de l'étape (B) consiste à déposer le sodium sur au moins une partie des particules de précurseur de matrice vitrifiée, généralement sur des particules de silice, puis à effectuer le mélange des constituants (i), (ii) et (iii) par interpénétration de deux pluies de particules comprenant, pour l'une des particules à base de Fe₂O₃, et pour l'autre, les particules de précurseur de matrice vitrifiée dont au moins une partie est imprégnée par du sodium.

Quel que soit son mode exact de mise en oeuvre, on préfère généralement, notamment de façon à optimiser la réaction d'oxydation du sodium *in situ,* que le mélange homogène réalisé lors de l'étape (B) soit porté à une température comprise entre 150°C et 400°C préalablement au traitement thermique de l'étape (C).

Ainsi, on préfère généralement que les constituants (i), (ii) et (iii) soient mélangés de façon homogène à une température inférieure à 150°C, puis soient amenés dans les conditions de températures de l'étape (C), c'est à dire à une température de 1000-1600°C, et de préférence entre 1400 et 1500°C, selon un gradient de température croissant. A cet effet, le réacteur mis en oeuvre dans le procédé de l'invention comprend de préférence une partie haute à une température comprise entre 100°C et 150°C, où a lieu l'étape de mélange (B) et une partie basse dans les conditions de températures de l'étape (C), c'est à dire à une température de 1000-1600°C, et de préférence à une température comprise entre 1400 et 1500°C, les constituants de l'étape (A) étant introduits dans la partie haute du réacteur où a lieu leur mélange.

Selon un mode de réalisation particulier, le réacteur mis en oeuvre dans le procédé de l'invention comprend une zone d'introduction à une température de 100°C à 200°C, une zone d'oxydation du sodium à une température de 150 à 400°C, et une zone de fusion dans les conditions de températures de l'étape (C), c'est à dire à une température de 1000-1600°C, et de préférence de 1400 à 1500°C. Dans ce cas, il peut s'avérer préférable qu'au niveau de la zone d'oxydation du sodium, le réacteur présente une section de type tronconique s'évasant vers le bas, ou, que de façon plus générale, qu'au niveau de ladite zone d'oxydation du sodium, la section du réacteur soit une fonction croissante lorsqu'on se déplace du haut du réacteur vers le bas. En effet, dans la mesure où l'oxydation du sodium est une réaction exothermique, il arrive qu'on observe au niveau de la zone d'oxydation une vitrification précoce menant à une prise en masse du mélange réactionnel. Dans ce cas de figure, la configuration préférentielle du réacteur proposée ci-dessus permet un écoulement de la croûte de verre formée vers la zone basse du réacteur dans les conditions de températures de l'étape (C), c'est à dire à une température de 1000-1600°C, où elle est fondue au sein du mélange réactionnel, ce qui évite un blocage des constituants (i), (ii) et (iii) en haut du réacteur, qui aurait pour effet de diminuer l'efficacité du mélange de ces constituants et/ou de limiter le rendement de la réaction d'oxydation du sodium.

Quelle que soit la configuration exacte du réacteur mis en oeuvre dans le procédé de l'invention, l'étape (C) de traitement thermique peut y être réalisée selon tout moyen connu de l'homme du métier, adapté pour réaliser une matrice vitrifiée. Le temps de séjour du mélange dans les conditions de température de l'étape (C) doit naturellement être suffisant pour porter le mélange homogène issu de l'étape (B) dans lesdites conditions de température.

L'étape (C) du procédé de l'invention peut par exemple être conduite en chauffant les parois du réacteur au sein duquel est conduit le procédé de l'invention, notamment par effet Joule. Cependant, de façon particulièrement avantageuse, l'étape (C) du procédé de l'invention est réalisée au moyen d'un chauffage par induction.

La mise en oeuvre d'un chauffage par induction dans le cadre de la réalisation d'un verre est une technique connue et qui a largement été décrite, qui est fondé sur le fait que le verre, isolant à basse température, devient conducteur sous l'effet d'une augmentation de température. La mise en oeuvre d'un chauffage par induction est particulièrement avantageuse, dans la mesure où elle peut permettre de former sur les parois du réacteur une couche de verre refroidi qui joue le rôle de couche protectrice pour le réacteur tout au long du procédé, ce qui s'avère particulièrement intéressant dans le cas où on souhaite réaliser le procédé en assurant des conditions de confinements optimales. Une telle technique, généralement désignée sous le nom de chauffage par induction "en auto-creuset refroidi", est d'ailleurs une technique largement utilisée dans le cadre de la vitrification de déchets radioactifs, et notamment les déchets de toute activité. Pour plus d'informations à ce sujet, on pourra notamment se reporter aux articles D 5935, D 5936 et D 5937 de G. Delevey parus dans *les techniques de l'ingénieur,* Génie électrique, volume D12.

Selon un mode particulier de mise en oeuvre du procédé, il est possible, au cours de l'étape (C), de convertir au moins une partie des oxydes de fer FeO et/ou Fe₃O₄ issus de la réaction d'oxydation du sodium sous la forme d'oxyde Fe₂O₃ qui participe plus efficacement à la constitution de la matrice de verre que les oxydes FeO ou Fe₃O₄. Pour ce faire, on injecte de l'oxygène de façon contrôlée au sein du mélange de l'étape (C). La quantité d'oxygène mise en oeuvre dans ce cadre est toutefois de préférence à adapter de façon à ce que la totalité de l'oxygène introduit soit consommé, de façon à ce que l'oxygène introduit ne soit susceptible ni de mener à la formation d'effluents gazeux, ni de conduire à l'obtention de bulles au sein de la matrice vitrifiée finale. On préfère souvent mettre en oeuvre des particules (iii) d'oxydes de fer Fe₂O₃ possédant la surface spécifique la plus élevée possible.

Si les étapes (A) à (C) du procédé de l'invention sont déterminantes pour l'obtention d'une composition homogène au sein de la matrice vitrifiée obtenue selon le procédé de l'invention, l'étape (D) de formation de la matrice vitrifiée à partir du mélange à l'état fondu issu de l'étape (C) quant à elle est une étape importante surtout en ce qui concerne les propriétés physiques de la matrice vitrifiée obtenue.

En particulier dans le cas où le procédé de l'invention est destiné à un confinement de sodium contenant des éléments radioactifs, il est nécessaire que la matrice vitrifiée obtenue présente une surface d'échange la plus faible possible avec l'environnement extérieur. A cet effet, il est donc nécessaire que le matériau vitrifié obtenu présente une résistance importante à la rupture.

L'étape (D) consiste généralement en une opération de coulée du mélange à l'état fondu (magma) issu de l'étape (C) au sein d'une lingotière ou au sein de récipients métalliques, généralement de fûts d'acier. Selon un autre mode de mise en oeuvre, le magma obtenu par coulée peut être laminé.

Le refroidissement de la composition s'opère généralement dans des conditions telles qu'elles limitent les risques d'apparition de micro-fractures par choc thermique. Dans ce cadre, on préfère généralement que le refroidissement de la composition s'opère de la façon la plus lente possible. A cet effet, on peut envisager, si nécessaire, une descente en température par paliers successifs. Un autre moyen de limiter les risques d'apparition de micro-fractures par choc thermique consiste à mettre en oeuvre de l'oxyde de bore B₂O₃ à titre de constituant du précurseur de matrice minérale (i).

Selon un mode de réalisation particulièrement avantageux, le procédé de l'invention peut être conduit selon un mode continu, c'est à dire par addition continue des constituants (i), (ii) et (iii) au sein du réacteur, et coulée continue du mélange issu de l'étape (C) en sortie du réacteur. Cette possibilité de conduire le procédé selon un mode continu constitue un avantage certain dans le cadre spécifique de la vitrification de sodium métallique comprenant des éléments radioactifs. En effet, elle permet de traiter le sodium selon un procédé totalement confiné.

Dans le cadre d'un processus conduit de façon continue, il est nécessaire, en règle générale, de former dans le réacteur un bain de verre fondu, le plus souvent à une température comprise entre 1000° et 1600°C, de préférence à une température supérieure à 1200°C, et avantageusement supérieure à 1400°C, typiquement entre 1400 et 1500°C. Ce bain est généralement obtenu selon une étape préliminaire consistant à introduire uniquement des précurseurs de matrice vitrifié au sein du réacteur à les soumettre à une étape de traitement thermique à 1400-1500°C, qui est généralement conduite dans les conditions de l'étape (C) définie ci-dessus. Avantageusement, l'obtention de ce bain de verre est obtenu par induction, de préférence dans les conditions de réalisation d'un "auto-creuset refroidi" tel que défini précédemment. Suite à l'obtention préalable de ce bain de verre, on réalise l'addition continue des constituants (i), (ii) et (iii), à des débits constants et l'écoulement continu du mélange de verre fondu obtenu. Hormis lors de la phase de démarrage du procédé, la composition de verre obtenue en sortie du réacteur est généralement homogène et constante.

Dans le cadre d'un procédé conduit selon un mode continu, on préfère le plus souvent que le ratio du débit massique de sodium métallique introduit, rapporté au débit massique de précurseur de matrice vitrifiée introduit soit compris entre 0,03 et 0,3, avantageusement, ce ratio massique est inférieur à 0,2, et de préférence inférieur à 0,14. Typiquement, il est compris entre 0,05 et 0,12. Le ratio du débit molaire de fer introduit sous forme d'oxyde de fer Fe₂O₃, rapporté au débit molaire de sodium introduit est quant à lui de préférence compris entre 0,5 : 1 et 3 : 1, et il est avantageusement supérieur ou égal à 0,6 : 1, et de préférence supérieur ou égal à 0,9 : 1. Par ailleurs, on préfère que ce ratio des débits molaires Fe/Na soit inférieur à 2:1, et avantageusement inférieur à 1,5 : 1. Par ailleurs, le ratio du débit massique de Fe₂O₃ introduit, rapporté au débit massique de précurseur de matrice vitrifiée introduit est généralement compris entre 0,05 et 0,5. Ce ratio est préférentiellement inférieur à 0,35, et de préférence inférieur à 0,3.

Dans le cadre d'un procédé conduit en continu, les débits d'entrée des constituants (i), (ii) et (iii) ainsi que le débit d'écoulement du mélange à l'état fondu en sortie de réacteur peuvent varier en une assez large mesure en fonction de la quantité de sodium que l'on souhaite traiter. Toutefois, le procédé de l'invention permet d'atteindre des débits d'écoulement de la composition de verre à l'état fondu relativement élevés typiquement compris entre 0,4 et 1,5 tonne par heure. Dans ce cadre, les débits d'entrée des différents constituants sont généralement de 15 à 160 kg par heure pour le sodium, de 60 à 540 kg par heure pour l'oxyde de fer Fe₂O₃, et de 325 à 800 kg par heure pour le précurseur de matrice vitrifiée

Comme on l'a déjà souligné, le procédé de l'invention est tout particulièrement adapté à l'immobilisation sous forme de verre de sodium métallique renfermant des éléments radioactifs, tel que le sodium liquide issu d'une mise en oeuvre dans un circuit primaire ou secondaire de réacteur nucléaire à neutrons rapides. Dans ce cadre, le procédé de l'invention permet de réaliser le confinement, au sein de la matrice vitrifiée, des éléments radioactifs présents dans le sodium. Dans le cadre spécifique d'un procédé conduit en présence d'éléments radioactifs, il est généralement préférable, de façon à assurer un confinement optimal du sodium de conduire le procédé dans un réacteur maintenu sous dépression, généralement sous une dépression relative de quelques centaines de Pa (quelques millibars) par rapport à la pression extérieure. Cette mise sous dépression du réacteur s'inscrit dans le cadre des mesures dites de "confinement dynamique", avantageusement mises en oeuvre dans le cadre du traitement de déchets radioactifs, qui visent à prévenir tout relargage de déchets vers le milieu extérieur (en cas de fuite accidentelle, on observe un transfert du milieu extérieur vers le milieu contaminé et non l'inverse). Un tel maintien sous dépression implique certes de très faibles effluents gazeux mais le contrôle de ces effluents mineurs peut être assuré de façon simple et efficace par des moyens usuels, couramment utilisés dans le domaine du traitement des effluents gazeux radioactifs, tels que des filtres de la catégorie dite "à très haute efficacité", ou encore des filtres à charbon actif.

Selon un mode de réalisation spécifique du procédé de l'invention, le sodium métallique (ii) peut être introduit lors de l'étape (A) conjointement à un autre métal alcalin sous forme métallique, généralement du potassium métallique. Le cas échéant, le sodium (ii) est généralement partie d'un mélange Na/K, le plus souvent sous forme liquide. Ce mélange Na/K peut notamment être un mélange du type de ceux utilisés dans les circuits de refroidissement d'installations nucléaires, et il peut donc comprendre des éléments radioactifs. Dans ce cadre spécifique, le procédé de l'invention, avantageusement mis en oeuvre selon un mode continu, permet d'immobiliser l'ensemble des métaux alcalins présents, ainsi que les éléments radioactifs qu'ils comprennent éventuellement, sous la forme d'un verre. Dans le cas de la présence d'un métal alcalin additionnel, les différentes conditions exposées ci-dessus quant aux différents ratios massiques et molaires à respecter préférentiellement pour conduire le procédé dans des conditions de vitrification optimales sont néanmoins à adapter, en transposant les indications données pour le sodium seul à l'ensemble des métaux alcalins présents. Ainsi, dans le cas de la mise en oeuvre d'un mélange de plusieurs métaux alcalins le taux total de métaux alcalins incorporé à la matrice final sera avantageusement inférieur à 30% en masse, la masse totale des métaux alcalins introduits, comprenant le sodium (ii), sera de préférence compris entre 3 et 25% en masse par rapport à la masse de précurseur (i). Par ailleurs, la quantité d'oxyde de fer (iii) mise en oeuvre est généralement telle que le ratio molaire de la quantité de fer introduite, rapportée à la quantité de métaux alcalins sous forme métallique, comprenant le sodium métallique (ii), est compris entre 0,5 : 1 et 3 : 1.

Quel que soit son mode exact de réalisation, il est à souligner que le procédé de l'invention peut être conduit au sein d'un réacteur de faible encombrement. De ce fait, un réacteur de vitrification mettant en oeuvre le procédé de l'invention peut être directement installé sur un site en cours de déconstruction, où il peut être utilisé pour traiter le sodium, généralement directement issu des circuits de refroidissement, sans avoir à effectuer un transport préalable de ce sodium, ce qui minimise encore les risques de contamination de l'environnement extérieur. Dans ce cadre, le procédé peut être mis en oeuvre dans des conditions de confinement extrêmement poussées, compatible avec la législation actuelle en matière de traitement de déchets nucléaires.

Par ailleurs, de par sa simplicité de mise en oeuvre, et de par le caractère relativement peu onéreux des composés chimiques qu'il met en oeuvre, le procédé de l'invention nécessite généralement des coûts d'exploitation très réduits.

En outre, le procédé de l'invention permet, sous réserve d'adapter convenablement la nature et la proportions des différents constituants (i), (ii) et (iii), d'obtenir des matrices vitrifiées qui présentent une composition homogène, sont stables dans le temps et résistantes mécaniquement, et qui sont peu, voire pas sujettes à la lixiviation du sodium et à la dévitrification, ce qui en fait des matrices de choix pour le confinement de sodium comprenant des éléments radioactifs sous la forme de colis de verres.

L'utilisation spécifique du procédé décrit ci-dessus, et en particulier d'un tel procédé conduit selon un mode continu, pour réaliser le confinement, dans une matrice vitrifiée, d'éléments radioactifs présents au sein de sodium métallique, ou au sein d'un mélange de métaux alcalins comprenant du sodium métallique, constitue un objet particulier de la présente invention.

## Revendications

1. Procédé d'immobilisation de sodium métallique sous forme de verre, comprenant les étapes consistant à :
(A) introduire au sein d'un réacteur :
(i) un précurseur de matrice vitrifiée ;
(ii) du sodium à l'état métallique ;
et
(iii) de l'oxyde de fer Fe₂O₃, en une quantité suffisante pour assurer l'oxydation du sodium métallique (ii) introduit,
lesdits constituants (i), (ii) et (iii) étant spécifiquement introduits dans le réacteur sous une forme dispersée ;
(B) par mise en contact des constituants (i), (ii) et (iii) sous forme dispersée au sein du réacteur, réaliser un mélange homogène de ces constituants;
(C) porter le mélange obtenu à une température comprise entre 1000 et 1600°C, ce par quoi on forme un mélange homogène à l'état fondu, dans lequel le sodium initialement introduit se trouve à l'état d'oxyde de sodium ; et
(D) récupérer le mélange fondu ainsi obtenu, et le soumettre à un refroidissement, ce par quoi on obtient une matrice vitrifiée de composition homogène intégrant le sodium initialement introduit à titre d'oxyde constitutif de ladite matrice vitrifiée.

2. Procédé selon la revendication 1, **caractérisé en ce que** le sodium métallique mis en oeuvre renferme des éléments radioactifs.

3. Procédé selon la revendication 1 ou selon la revendication 2, **caractérisé en ce que** le précurseur de matrice vitrifiée (i) comprend des particules solides à base :
- d'oxyde de silicium SiO₂ ; et
- d'oxyde de calcium CaO et/ou d'oxyde de bore B₂O₃.

4. Procédé selon la revendication 3, **caractérisé en ce que** les particules présentes dans le précurseur de matrice vitrifiée présentent une taille moyenne comprise entre 0,1 et 20 millimètres.

5. Procédé selon l'une quelconque des revendications 1 à 4, **caractérisé en ce que** le sodium métallique mis en oeuvre est introduit sous forme de gouttelettes liquides au sein du réacteur.

6. Procédé selon l'une quelconque des revendications 1 à 4, **caractérisé en ce que** le sodium métallique mis en oeuvre est introduit sous la forme de sodium déposé sur au moins une partie des particules de précurseur de matrice vitrifiée.

7. Procédé selon l'une quelconque des revendications 1 à 6, **caractérisé en ce que** la masse de sodium métallique introduite est comprise entre 3 % et 20 % en masse par rapport à la masse de précurseur de matrice vitrifiée (i) introduite.

8. Procédé selon l'une quelconque des revendications 1 à 7, **caractérisé en ce que** l'oxyde de fer Fe₂O₃ est introduit sous la forme de particules comprenant de l'oxyde de fer Fe₂O₃ et possédant une une taille moyenne comprise entre 0,1 et 20 millimètres.

9. Procédé selon l'une quelconque des revendications 1 à 8, **caractérisé en ce que** le ratio molaire de la quantité de fer introduite sous forme d'oxyde de fer Fe₂O₃, rapportée à la quantité de sodium introduite est compris entre 0,5 : 1 et 3 : 1.

10. Procédé selon l'une quelconque des revendications 1 à 9, **caractérisé en ce que** la masse de Fe₂O₃ introduite est comprise entre 5 % et 50 % en masse par rapport à la masse de précurseur de matrice vitrifiée introduite.

11. Procédé selon l'une quelconque des revendications 1 à 10, **caractérisé en ce que** le mélange homogène de l'étape (B) est effectué en introduisant le précurseur de matrice vitrifiée et l'oxyde de fer au sein du réacteur sous la forme d'une pluie de particules et en pulvérisant le sodium à l'état liquide au sein de ladite pluie de particules.

12. Procédé selon l'une quelconque des revendications 1 à 11, **caractérisé en ce que** le mélange homogène réalisé lors de l'étape (B) est porté à une température comprise entre 150°C et 400°C préalablement au traitement thermique de l'étape (C).

13. Procédé selon l'une quelconque des revendications 1 à 12, **caractérisé en ce que** l'étape (C) est réalisée au moyen d'un chauffage par induction.

14. Procédé selon l'une quelconque des revendications 1 à 13, **caractérisé en ce que** ledit procédé est un procédé conduit selon un mode continu.

15. Procédé selon la revendications 14, **caractérisé en ce que** le ratio du débit massique de sodium métallique introduit, rapporté au débit massique de précurseur de matrice vitrifiée introduit est compris entre 0,03 et 0,3.

16. Procédé selon l'une quelconque des revendications 14 ou selon la revendication 15, **caractérisé en ce que** le ratio du débit molaire de fer introduit sous forme d'oxyde de fer Fe₂O₃, rapporté au débit de sodium introduit est compris entre 0,5 : 1 et 3 : 1.

17. Procédé selon l'une quelconque des revendications 14 à 16, **caractérisé en ce que** le ratio du débit massique de Fe₂O₃ introduit, rapporté au débit massique de précurseur de matrice vitrifiée introduit est compris entre 0,05 et 0,5.

18. Procédé selon l'une quelconque des revendications 1 à 17, **caractérisé en ce que** ledit procédé est conduit dans un réacteur maintenu sous dépression.

19. Utilisation du procédé de l'une quelconque des revendications 1 à 18, pour réaliser le confinement, dans une matrice vitrifiée, d'éléments radioactifs présents au sein de sodium métallique.

20. Procédé selon la revendication 1, **caractérisé en ce que**, lors de l'étape (A), le sodium métallique (ii) est introduit conjointement à un autre métal alcalin sous forme métallique, notamment sous la forme d'un mélange Na/K pouvant renfermer des éléments radioactifs.

21. Utilisation du procédé de la revendication 20, pour réaliser le confinement, dans une matrice vitrifiée, d'éléments radioactifs présents au sein d'un mélange de métaux alcalins comprenant du sodium métallique.

## Claims

1. A method for immobilising metallic sodium in glass form, including the steps consisting of:
(A) introducing into a reactor:
(i) a vitrified matrix precursor;
(ii) metallic-state sodium;
and
(iii) iron oxide Fe₂O₃, in a quantity sufficient to ensure oxidation of the metallic sodium (ii) introduced,
said constituents (i), (ii) and (iii) being specifically introduced into the reactor in a dispersed form;
(B) by bringing into contact constituents (i), (ii) and (iii) in a dispersed form inside the reactor and carrying out a homogeneous mixing of these constituents;
(C) bringing the mixture obtained to temperature of between 1000 and 1600°C, whereby a homogeneous mixture is formed in a melted state, wherein the sodium initially introduced is found in the sodium oxide state; and
(D) recovering the melted mixture obtained in this manner and subjecting it to cooling, whereby there is obtained a vitrified matrix with a homogeneous composition which integrates the sodium initially introduced as an oxide constituting said vitrified matrix.

2. The method according to Claim 1, **characterised in that** the metallic sodium implemented contains radioactive elements.

3. The method according to Claim 1 or Claim 2, **characterised in that** the precursor of the vitrified matrix (i) includes solid particles with a base of:
- silicon oxide SiO₂; and
- calcium oxide CaO and/or boron oxide B₂O₃.

4. The method according to Claim 3, **characterised in that** the particles present in the vitrified matrix precursor have an average size of between 0.1 and 20 millimetres.

5. The method according to any one of Claims 1 to 4, **characterised in that** the metallic sodium implemented is introduced in the form of liquid droplets inside the reactor.

6. The method according to any one of Claims 1 to 4, **characterised in that** the metallic sodium implemented is introduced in the form of sodium deposited on at least a part of the particles of the vitrified matrix precursor.

7. The method according to any one of Claims 1 to 6, **characterised in that** the mass of metallic sodium introduced is between 3% and 20% by mass in relation to the mass of the vitrified matrix precursor (i) introduced.

8. The method according to any one of Claims 1 to 7, **characterised in that** the iron oxide Fe₂O₃ is introduced in the form of particles including iron oxide Fe₂O₃ and having an average size of between 0.1 and 20 millimetres.

9. The method according to any one of Claims 1 to 8, **characterised in that** the molar ratio of the quantity of iron introduced in the form of iron oxide Fe₂O₃ to the quantity of sodium introduced is between 0.5 : 1 and 3 : 1.

10. The method according to any one of Claims 1 to 9, **characterised in that** the mass of Fe₂O₃ introduced is between 5% and 50% by mass in relation to the mass of the vitrified matrix precursor introduced.

11. The method according to any one of Claims 1 to 10, **characterised in that** the homogeneous mixing of Step (B) is carried out by introducing the vitrified matrix precursor and the iron oxide into the reactor in the form of a rain of particles and by pulverising the sodium in a liquid state inside said rain of particles.

12. The method according to any one of Claims 1 to 11, **characterised in that** the homogeneous mixture produced at Step (B) is brought to a temperature of between 150°C and 400°C prior to the thermal treatment of Step (C).

13. The method according to any one of Claims 1 to 12, **characterised in that** Step (C) is carried out by means of induction heating.

14. The method according to any one of Claims 1 to 13, **characterised in that** said method is a method conducted in a continuous mode.

15. The method according to Claim 14, **characterised in that** the ratio of the mass flow of metallic sodium introduced to the mass flow of vitrified matrix precursor introduced is between 0.03 and 0.3.

16. The method according to any one of Claims 14 or 15, **characterised in that** the ratio of the molar flow of iron introduced in the form of iron oxide Fe₂O₃ to the flow of sodium introduced is between 0.5 : 1 and 3 : 1.

17. The method according to any one of Claims 14 to 16, **characterised in that** the ratio of the mass flow of Fe₂O₃ introduced to the mass flow of vitrified matrix precursor introduced is between 0.05 and 0.5.

18. The method according to any one of Claims 1 to 17, **characterised in that** said method is conducted in a reactor maintained under vacuum.

19. Use of the method according to any one of Claims 1 to 18, in order to carry out the confinement, in a vitrified matrix, of radioactive elements present in the metallic sodium.

20. The method according to Claim 1, **characterised in that**, during Step (A), the metallic sodium (ii) is introduced together with another alkaline metal in a metallic form, notably in the form of an Na/K mixture possibly containing radioactive elements.

21. Use of the method of Claim 20, in order to carry out the confinement, in a vitrified matrix, of radioactive elements present in a mixture of alkaline metals including metallic sodium.

## Patentansprüche

1. Verfahren zur Immobilisierung von metallischem Natrium in Form von Glas, umfassend die Schritte, bestehend aus:
(A) Einbringen ins Innere eines Reaktors:
(i) einen Vorläufer einer glasierten Matrix:
(ii) Natrium in metallischem Zustand;
und
(iii) Eisenoxid, Fe₂O₃, in einer Menge, die ausreichend ist, um die Oxidation des eingebrachten metallischen Natriums (ii) sicherzustellen,
wobei diese Bestandteile (i), (ii) und (iii) spezifisch in einer dispergierten Form in den Reaktor eingebracht werden:
(B) Erzeugen eines homogenen Gemisches dieser Bestandteile durch Inkontaktbringen der Bestandteile (i), (ii) und (iii) in dispergierter Form im Inneren des Reaktors;
(C) Erhitzen des erhaltenen Gemisches auf eine Temperatur, die zwischen 1000 und 1600°C beträgt, wodurch man ein homogenes Gemisch im geschmolzenen Zustand bildet, in welchem sich das ursprünglich eingebrachte Natrium im Zustand von Natriumoxid befindet; und
(D) Zurückerlangen des auf diese Art erhaltenen geschmolzenen Gemisches, und Unterziehen desselben einer Abkühlung, wodurch man eine glasierte Matrix erhält aus einer homogenen Zusammensetzung, worin das ursprünglich eingebrachte Natrium als diese glasierte Matrix bildendes Oxid enthalten ist.

2. Verfahren nach Anspruch 1, **dadurch gekennzeichnet, dass** das verwendete metallische Natrium radioaktive Elemente enthält.

3. Verfahren nach Anspruch 1 oder nach Anspruch 2, **dadurch gekennzeichnet, dass** der Vorläufer der glasierten Matrix (i) feste Teilchen enthält basierend auf:
- Siliziumoxid SiO₂; und
- Kalziumoxid CaO und/oder Boroxid B₂O₃.

4. Verfahren nach Anspruch 3, **dadurch gekennzeichnet, dass** die im Vorläufer der glasierten Matrix vorliegenden Teilchen eine Durchschnittsgröße zwischen 0.1 und 20 Millimetern aufweisen.

5. Verfahren nach einem der Ansprüche 1 bis 4, **dadurch gekennzeichnet, dass** das verwendete metallische Natrium in Form von flüssigen Tröpfchen in das Innere des Reaktors eingebracht wird.

6. Verfahren nach einem der Ansprüche 1 bis 4, **dadurch gekennzeichnet, dass** das verwendete metallische Natrium in der Form eingebracht wird, dass das Natrium auf mindestens einem Teil der Teilchen des Vorläufers der glasierten Matrix abgelagert wird.

7. Verfahren nach einem der Ansprüche 1 bis 6, **dadurch gekennzeichnet, dass** die Masse des eingebrachten metallischen Natriums zwischen 3 % und 20 % an Masse im Vergleich zu der Masse des eingebrachten Vorläufers der glasierten Matrix (i) beträgt.

8. Verfahren nach einem der Ansprüche 1 bis 7, **dadurch gekennzeichnet, dass** das Eisenoxid Fe₂O₃ in Form von Teilchen eingebracht wird, die Eisenoxid Fe₂O₃ umfassen, und eine Durchschnittsgröße zwischen 0,1 und 20 Millimetern aufweisen.

9. Verfahren nach einem der Ansprüche 1 bis 8, **dadurch gekennzeichnet, dass** das molare Verhältnis der Menge an in Form von Eisenoxid Fe₂O₃ eingebrachtem Eisen bezogen auf die Menge an eingebrachtem Natrium zwischen 0,5:1 und 3:1 beträgt.

10. Verfahren nach einem der Ansprüche 1 bis 9, **dadurch gekennzeichnet, dass** die Masse an eingebrachtem Fe₂O₃ zwischen 5% und 50 % an Masse im Vergleich zur Masse an eingebrachtem Vorläufer der glasierten Matrix beträgt.

11. Verfahren nach einem der Ansprüche 1 bis 10. **dadurch gekennzeichnet, dass** das homogene Gemisch aus Schritt (B) **dadurch** erzeugt wird, dass der Vorläufer der glasierten Matrix und das Eisenoxid im Inneren des Reaktors in Form eines Teilchenregens eingebracht werden, und das Natrium in flüssigem Zustand ins Innere dieses Teilchenregens gesprüht wird.

12. Verfahren nach einem der Ansprüche 1 bis 11, **dadurch gekennzeichnet, dass** das in Schritt (B) erzeugte homogene Gemisch vor der thermischen Behandlung in Schritt (C) auf eine Temperatur, die zwischen 150°C und 400°C beträgt, gebracht wird.

13. Verfahren nach einem der Ansprüche 1 bis 12, **dadurch gekennzeichnet, dass** Schritt (C) durch Erhitzen über Induktion realisiert wird.

14. Verfahren nach einem der Ansprüche 1 bis 13, **dadurch gekennzeichnet, dass** das Verfahren ein Verfahren ist, das nach einem kontinuierlichen Modus durchgeführt wird.

15. Verfahren nach Anspruch 14, **dadurch gekennzeichnet, dass** das Verhältnis des Massendurchsatzes an eingebrachtem metallischem Natrium bezogen auf den Massendurchsatz an eingebrachtem Vorläufer der glasierten Matrix zwischen 0,03 und 0,3 beträgt.

16. Verfahren nach einem der Ansprüche 14 oder nach Anspruch 15, **dadurch gekennzeichnet, dass** das Verhältnis des molaren Durchsatzes an Eisen, eingebracht in Form von Eisenoxid, Fe₂O₃, bezogen auf den Durchsatz an eingebrachtem Natrium zwischen 0,5:1 und 3:1 beträgt.

17. Verfahren nach einem der Ansprüche 14 bis 16, **dadurch gekennzeichnet, dass** das Verhältnis des Massendurchsatzes an eingebrachtem Fe₂O₃ bezogen auf den Massendurchsatz an eingebrachtem Vorläufer der glasierten Matrix zwischen 0,05 und 0,5 beträgt.

18. Verfahren nach einem der Ansprüche 1 bis 17, **dadurch gekennzeichnet, dass** das Verfahren in einem Reaktor durchgeführt wird, der bei Unterdruck gehalten wird.

19. Verwendung des Verfahrens nach einem der Ansprüche 1 bis 18 zum Erzeugen der Beschränkung von radioaktiven Elementen, die in metallischem Natrium vorliegen, in einer glasierten Matrix.

20. Verfahren nach Anspruch 1, **dadurch gekennzeichnet, dass** in Schritt (A) das metallische Natrium (ii) gemeinsam mit einem anderen Alkalimetall in metallischer Form eingebracht wird, insbesondere in Form eines Na/K-Gemisches, welches radioaktive Elemente enthalten kann.

21. Verwendung des Verfahrens nach Anspruch 20 zum Erzeugen der Beschränkung von radioaktiven Elementen, die in einem Gemisch aus Alkalimetallen vorliegen, welches metallische Natrium enthält, in einer glasierten Matrix.
